# EUROPEAN PATENT APPLICATION

(11) **EP 4 575 260 A1**
(43) Date of publication of application: **25.06.2025**
(21) Application number: 23859108.5
(22) Date of filing: 09.08.2023
(51) Int. Cl.: F16D 65/18

(54) **BRAKE CALIPER**

(30) Priority: 30.08.2022 CN 202211046634
(71) Applicant: Bethel Automotive Safety Systems Co., Ltd., Wuhu, Anhui 241009 (CN)
(72) Inventor: GUO, Fengliang, Wuhu, Anhui 241009 (CN); ZHU, Yuancheng, Wuhu, Anhui 241009 (CN); LI, Yundong, Wuhu, Anhui 241009 (CN)
(74) Representative: Canzler & Bergmeier Patentanwälte Partnerschaft mbB
(86) International application number: PCT/CN2023/112045
(87) International publication number: WO 2024/046073

(57) **Abstract**

Disclosed in the present invention is a brake caliper, comprising an actuator, a brake caliper body, a motion conversion mechanism and an adjusting member provided in a force flow transmitted by an axial force between the actuator and a brake disc, wherein the adjusting member and paired members are movably connected, so that the motion conversion mechanism has a degree of freedom to adjust a rotation angle and radial displacement. According to the brake caliper of the present invention, the adjusting member is provided, so that the motion conversion mechanism has an adjustment space for the rotation angle and the radial displacement, and the influence of brake tangential force, brake pad eccentric wear and caliper body deformation on the motion conversion mechanism can be eliminated, thereby prolonging the service life of the motion conversion mechanism.

## Description

### FIELD OF TECHNOLOGY

The present disclosure belongs to the field of braking systems, and specifically, to a brake caliper.

### BACKGROUND

With the electrification transformation of vehicles, brake-by-wire systems gradually become a major trend in the automotive industry. As one of the brake-by-wire systems, the electromechanical braking (EMB) system adopts the form of direct drive by the wheel-end motor, and converts torque and rotational motion of the motor into the thrust and translational motion of a connecting part through a motion conversion mechanism, to push a brake pad to clamp a brake disc to generate a braking force, so that the system has advantages such as compact layout, fast response, and high efficiency.

The EMB system has not been widely used in vehicles for the following reasons. Motion conversion mechanisms that meet use requirements have high costs and a complex structure and are not suitable for mass production, such as a planetary roller screw and a slope mechanism. Motion conversion mechanisms that meet cost and production process requirements cannot adapt to complex working conditions of vehicle braking and have insufficient service life, such as a ball screw and a sliding screw. Taking ball screws as an example, to meet braking performance requirements, the outer diameter of the ball screw needs to be designed very large to resist an axial force. Even so, the ball screw is still prone to failure in a service braking system for the following reasons.
1. The ball screw is subjected to both an axial force and a radial force during braking, which is one of the reasons for the failure of the ball screw. In a vehicle braking system, a brake disc rotates along with a wheel. During braking, a brake pad is also subjected to a tangential force from the brake disc. After the tangential force is transmitted to the ball screw, it is equivalent to that a radial force is applied to the ball screw. When an output end of the ball screw is subjected to a radial force, a torque that makes the ball screw deflect around a point is generated, and is referred to as an overturning moment. The overturning moment causes a deflection of a nut from an axis of a screw shaft. As a result, only a few balls are subjected to a force, leading to the collapse of balls or permanent deformation of a ball track.
2. Due to the structure of a floating caliper, a reaction force of a braking clamping force causes the deformation of a caliper body, and the axis of a cylinder bore of the caliper body will be deflected. An operating axis of a screw shaft usually deflects together along with the deformation of the caliper body. The axis of a nut tends to remain perpendicular to a plane of a brake pad or a brake disc, leading to misalignment between the operating axes of the screw shaft and the nut. This misalignment causes the nonuniform distribution of axial load on a cross-section of the ball screw, and then causes a nonuniform Hertz pressure on balls, which also leads to the failure of the ball screw.

To solve this problem, Patent CN107076237A proposes a solution of making an arched coupling surface between a piston and a nut, which is similar to a contact form of an arc-shaped surface and can compensate for misalignment between an axis of a piston and an axis of a ball screw. The problem in the patent is that only the deformation of a caliper body is taken into consideration, and the impact of brake pad eccentric wear is not taken into consideration. A tangential force generated during braking also causes deformation of a caliper body with respect to a support. A result of the deformation is reflected in a difference between the wear extents of a screw-in end and a screw-out end of a brake pad. This is referred to as an eccentric wear phenomenon of the brake pad. The solution also causes the misalignment between the axis of the piston and the axis of the ball screw. The direction of the misalignment is perpendicular to the direction of misalignment caused by the deformation of the caliper body. Therefore, it cannot be adjusted or compensated through the structure in patent CN107076237B.

Patent US8607939B2 proposes a structure to solve the above problems. A conical contact is made between a screw shaft and a flange, as well as between a nut and a piston. It also can adjust and compensate for the misalignment between an axis of a piston and an axis of a ball screw. The problem in the patent is that to meet load-bearing requirements, the diameter of the ball screw needs to be made very large, and the diameter of a conical surface also increases accordingly. This results in a longer lever arm for the overturning moment, leading to a larger overturning moment that the system must withstand.

Secondly, the space available for arranging a brake caliper on the vehicle is very limited. Because a drive system is present at the front wheels, the drive shaft sways transversely during steering and moves up and down when passing over bumps. Therefore, the axial height of the brake caliper is required to be as low as possible, and its structure should be as compact as possible. In Patent US20050034936A1, a hollow ball screw is used. A planetary gear is arranged inside the screw shaft, and the motor is arranged coaxially with the cylinder bore, so that the structure is very compact. However, the axial dimensions are still very large, and the layout issue of EMB systems is not fully resolved.

Therefore, how to ensure the fatigue life of the motion conversion mechanism under working conditions such as overturning moment, caliper body deformation, and brake pad eccentric wear, while reducing the axial height of the brake caliper, is a challenging problem.

In summary, the brake caliper in the prior art has the following defects.
1. Due to the overturning moment, caliper body deformation, and brake pad eccentric wear generated by the tangential force during braking, the motion conversion mechanism is subjected to an excessively large force or a nonuniform force, leading to premature failure.
2. When the conical contact structure is adopted, the diameter of the conical surface increases as the diameter of the ball screw increases. This enlarges the radius of a frictional torque, resulting in an increase in the overturning moment.
3. Due to the limited space at the brake caliper mounting position on the vehicle, the axial height of the brake caliper is required to be as low as possible. However, there is no effective solution in the prior art.

### SUMMARY

The present disclosure provides a brake caliper, to prolong the service life of the motion conversion mechanism.

The present disclosure provides a brake caliper, including an actuator, a brake caliper body, a motion conversion mechanism, and an adjusting part arranged in a force flow of axial force transmission between the actuator and a brake disc. The adjusting part and mating parts are movably connected, enabling the motion conversion mechanism to have adjustment degrees of freedom to adjust a rotation angle and/or radial displacement.

In some embodiments, the adjusting part and the adjacent mating part form a spherical pair, a conical pair, a planar pair, or a combination thereof.

In some embodiments, the adjusting part is formed by spherical surfaces at two ends and an intermediate section located between the spherical surfaces at the two ends, and the spherical surfaces at the two ends of the adjusting part are respectively in contact with their adjacent mating parts to form a double-spherical assembly.

In some embodiments, the intermediate section of the adjusting part at least includes two mating portions with different cross-section sizes, the adjacent mating parts respectively mate with the two mating portions of the intermediate section, and the adjacent mating parts rotate synchronously.

In some embodiments, the brake caliper further includes a coupling, and the actuator is connected to the motion conversion mechanism through the coupling.

In some embodiments, the motion conversion mechanism includes a translating part and a rotating part, the rotating part is connected to the coupling, the adjusting part is disposed between the coupling and the rotating part, and the adjusting part forms a spherical pair mechanism with the coupling and the rotating part respectively.

In some embodiments, the mating portions have a non-cylindrical structure, and the coupling and the rotating part are connected through the adjusting part to achieve synchronous rotation.

In some embodiments, the structure of the mating portions is spline or flat square.

In some embodiments, the mating portions have a cylindrical structure, and the coupling and the rotating part are connected through the spline or flat square structures to achieve synchronous rotation.

In some embodiments, the brake caliper further includes a piston, and the motion conversion mechanism includes a translating part and a rotating part. The adjusting part is disposed between the translating part and the piston, and the adjusting part forms a spherical pair mechanism with the piston and the translating part respectively.

In some embodiments, the coupling and the rotating part form a fixed connection through screwing, riveting, or welding, and the translating part and the piston form a movable connection through a retaining ring.

In some embodiments, the piston is provided with a cavity, the cavity fully accommodates the motion conversion mechanism, and an outer wall of the piston mates with a cylinder bore of the brake caliper body.

In some embodiments, the piston is provided with a cavity, the cavity fully accommodates a part of the motion conversion mechanism, and an outer wall of the translating part mates with a cylinder bore of the brake caliper body.

In some embodiments, a radial spring is mounted between the translating part and the piston.

In some embodiments, the mating portions have a non-cylindrical structure, and the translating part and the piston are connected through the adjusting part to achieve synchronous axial movement.

In some embodiments, the structure of the mating portions is spline or flat square.

In some embodiments, an anti-rotation mechanism is disposed between the translating part and the brake caliper body or between the piston and the brake caliper body.

In some embodiments, an elastic ring and a dust cover are mounted between the translating part and the cylinder bore of the brake caliper body or between the piston and the cylinder bore of the brake caliper body.

In some embodiments, the brake caliper further includes a bearing. **The** bearing and the double-spherical assembly are disposed inside the translating part or inside the piston.

In some embodiments, a limiting mechanism is disposed between the rotating part and the translating part, and the limiting mechanism matches the rotating part and the translating part.

The brake caliper of the present disclosure is provided with an adjusting part, enabling the motion conversion mechanism to have adjustment degrees to adjust a rotation angle and/or radial displacement. The impact of a brake tangential force, brake pad eccentric wear, and caliper body deformation on the motion conversion mechanism can be eliminated, thereby prolonging the service life of the motion conversion mechanism.

### BRIEF DESCRIPTION OF THE DRAWINGS

FIG. 1 is a schematic diagram of the overall structure of a brake caliper in Embodiment 1;
FIG. 2 is a simplified force diagram during caliper body deformation or brake pad eccentric wear in Embodiment 1;
FIG. 3 is a simplified force diagram of when bearing a radial force in Embodiment 1;
FIG. 4 is a schematic diagram of the structure of a double-spherical assembly in Embodiment 2;
FIG. 5 is a schematic diagram of the overall structure of a brake caliper in Embodiment 3;
FIG. 6 is a schematic diagram of the structure of a double-spherical assembly in Embodiment 4;
FIG. 7 is a schematic diagram of the structure of an adjusting part in Embodiments 1 and 3;
FIG. 8 is a schematic diagram of the structure of an adjusting part in Embodiments 2 and 4.

Reference numerals: 1. Actuator; 2. Coupling; 3. Brake caliper body; 4. Motion conversion mechanism; 4a. Rotating part; 4b. Translating part; 4c. Limiting mechanism; 5. First bearing; 6. Piston; 7. Anti-rotation screw; 8. Adjusting part; 9. Spring; 10. Second bearing; 11. Retaining ring; 12. Elastic ring; 13. Dust cover; 14. Radial spring; 15. Screw; 16. Inner brake pad; 17. Brake disc; and 18. Outer brake pad.

### DETAILED DESCRIPTION

The specific embodiments of the present disclosure are described below in further detail with reference to the accompanying drawings, to help those skilled in the art to have a more complete, accurate, and in-depth understanding of the technical solutions of the present disclosure, and to facilitate its implementation.

A double-spherical assembly is used as an example.

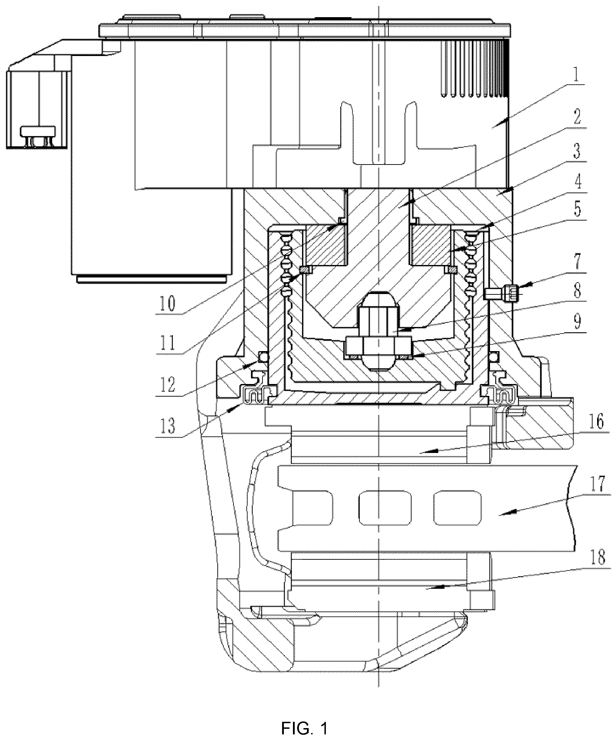

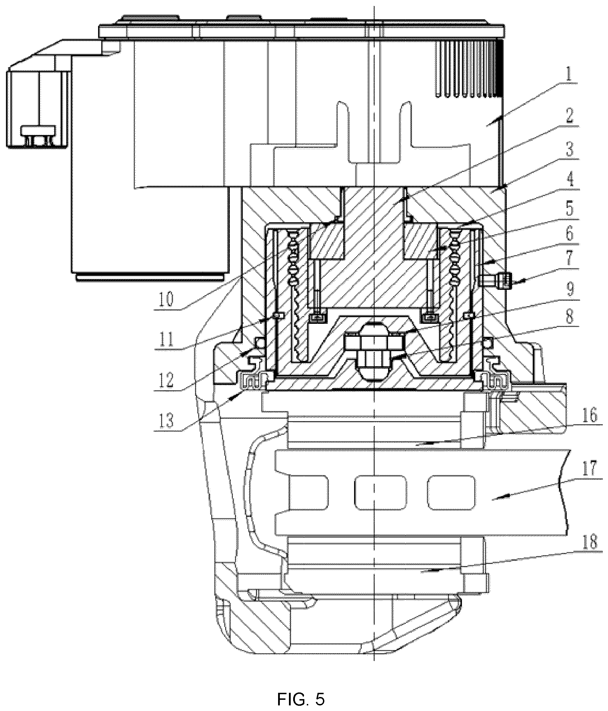

As shown in FIG. 1 and FIG. 5, the present disclosure provides a brake caliper, which includes a brake caliper body 3, an actuator 1, an inner brake pad 16, an outer brake pad 18, and a motion conversion mechanism 4. The actuator 1 at least includes a motor, as well as a speed-reducing and torque-increasing mechanism. The motion conversion mechanism 4 is arranged in a cylinder bore of the brake caliper body 3. A torque and rotational motion provided by the motor are transmitted to the motion conversion mechanism 4 through the speed-reducing and torque-increasing mechanism, and then converted into thrust and linear movement of a translating part 4b, to push the brake pads to clamp a brake disc 17. An adjusting part 8 is arranged in a force flow of the axial force transmission between the actuator 1 and the brake disc 17. The adjusting part 8 and its surrounding mating parts form a double-spherical assembly.

The brake caliper of the present disclosure has the following advantages.
1. The adoption of the double-spherical assembly can eliminate the impact of the overturning moment, brake pad eccentric wear, caliper body deformation, and the like on the motion conversion mechanism 4, thereby prolonging the service life of the motion conversion mechanism 4.

An oval-shaped adjusting part 8 is used in the present disclosure. Spherical surfaces are provided at two ends of the adjusting part 8, and an intermediate section of the adjusting part 8 has a cylinder structure or a structure that can achieve other functions, for example, a polyhedron, a flat square, or a spline that can transmit torque. The adjusting part 8 is arranged in in a force flow of the axial force transmission between the actuator 1 and the brake disc 17, and the adjusting part 8 and its adjacent mating parts respectively form a spherical pair to form the double-spherical assembly. Compared with a single-spherical assembly, the double-spherical assembly in the present disclosure has a degree of freedom of a rotation angle and a degree of freedom of displacement in a radial direction.

For example, the motion conversion mechanism is a ball screw assembly. In the present disclosure, the adjusting part 8 may be disposed between a coupling 2 and a screw shaft. Positions of the coupling 2 and the screw shaft that are in contact with the adjusting part 8 are both made into spherical surfaces. The adjusting part 8 and the coupling 2, as well as the adjusting part 8 and the screw shaft, form a spherical pair respectively.
(1) In the prior art, the ball screw assembly is subjected to a superimposed load of the axial force and the radial force, which will generate an overturning moment that rotates around a certain point, causing the misalignment between axes of the screw shaft and the nut. As a result, clearances between the internal and external thread raceways are inconsistent, and only a part of the balls are subjected to force, thus leading to failure. The present disclosure provides a method for eliminating the impact of an overturning moment as follows.

In the present disclosure, when the translating part 4b is subjected to a ball screw radial force generated from a braking tangential force, due to the action of the adjusting part 8 and the coupling 2 and the action of the adjusting part 8 and a limiting mechanism 4c, the ball screw assembly has a degree of freedom of radial displacement. The whole ball screw assembly moves toward the other side of a cylinder bore of a cavity. An axis of the coupling 2 remains unchanged. The adjusting part 8 deflects by a particular angle, but can still transmit torque. Relative displacement in a horizontal direction is generated between the axis of the ball screw assembly and the axis of the coupling 2, until an outer wall of the translating part 4b is in contact with an inner wall of the cylinder bore, and the radial force is transmitted to a caliper body and converted into the deformation of the caliper body. In this process, the axes of the rotating part 4a and the translating part 4b remain coincident, and the axial and radial loads of the ball screw assembly are uniformly distributed, so that failure is avoided.

(2) In the prior art, generally the axis of the screw shaft remains consistent with an axis of the cylinder bore of the caliper body, and the axis of the nut tends to remain perpendicular to the plane of a brake pad. After the brake pad experiences eccentric wear, the wear extent on one side is large, and that on the other side is small, making the axis of the nut tilt. As a result, misalignment occurs between the axis of the nut and the axis of the screw shaft, and axial load distribution on a cross-section of the ball screw assembly is nonuniform, thus leading to failure. The present disclosure provides a method for eliminating the impact of brake pad eccentric wear:
In the present disclosure, the coupling 2 receives a rotational speed and torque transmitted from the actuator 1. The axis of the coupling 2 remains consistent with the axis of the cylinder bore of the brake caliper body 3. The coupling 2 transmits the rotational speed and torque to the rotating part 4a through the adjusting part 8. Through the adjustment of the double-spherical assembly, the axis of the rotating part 4a or the translating part 4b is allowed to have a certain deflection angle. When brake pad eccentric wear causes deflection of the translating part 4b, the rotating part 4a can deflect together along with the translating part 4b. An angle by which the adjusting part 8 can tilt is greater than the angle by which the translating part 4b tilts due to brake pad eccentric wear. Therefore, the axis of the rotating part 4a can keep deflecting together along with the axis of the translating part 4b, and the torque transmission of the coupling 2 and the rotating part 4a is not affected. The axial load distribution of the ball screw assembly is uniform so that failure is avoided.

(3) In the prior art, when the nut is used as an output part to push the inner brake pad, a reaction force of the axial force is transmitted to the caliper body, causing caliper body deformation. The axis of the nut tends to be kept perpendicular to the plane of the brake pad. The axis of the rotating part 4a deflects together along with the caliper body deformation. As a result, misalignment occurs between the axis of the nut and the axis of the rotating part 4a, and the axial load distribution on the cross-section of the ball screw assembly is nonuniform, leading to failure. The present disclosure provides a method for eliminating the impact of caliper body deformation.

In the present disclosure, when the caliper body deformation causes deflection of the axis of the coupling 2, the adjusting part 8 first deflects by a certain angle. Instead of tilting along with the coupling 2, the rotating part 4a tends to remain coincident with the axis of the translating part 4b. The angle by which the adjusting part 8 can tilt is greater than the angle by which the coupling 2 tilts due to the deformation of the brake caliper body 3. Therefore, the axis of the rotating part 4a can deflect along with the axis of the translating part 4b. The axial load distribution of the ball screw assembly is uniform so that failure is avoided.

2. The spherical pair mechanism has a small radius, and a deflection radius is reduced, so that the overturning moment is reduced.

In the present disclosure, a single adjusting part 8 and a mating part form a spherical pair mechanism, which has no relation to the diameter dimension of the ball screw. The radius of the spherical pair mechanism can be made very small, reducing the deflection radius when a radial force is applied, so that the overturning moment can be reduced.

3. All components are arranged to overlap in an axial direction, without occupying additional space, thus reducing the axial length.

In the present disclosure, the ball screw assembly is made into a hollow structure. The adjusting part 8, bearings, and other components are arranged inside the hollow part of the rotating part 4a, so that an axial space is not additionally occupied, and the axial length of the brake caliper can be minimized.

In summary, in the present disclosure, an adjusting part 8 is provided in the brake caliper, and the double-spherical assembly is formed in the force flow transmitted by the axial force, to allow the motion conversion mechanism 4 to have the adjustment freedom in terms of the rotation angle and the radial displacement. During the operation, the axes of the rotating part 4a and the translating part 4b in the motion conversion mechanism 4 always tend to remain coincident, to ensure the uniform distribution of axial load and radial load, and avoid failure caused by only a part of the balls bearing the load, thereby prolonging the service life of the motion conversion mechanism 4. In addition, a spherical radius of the adjusting part 8 may be designed to be sufficiently small, thereby reducing the deflection radius and the overturning moment. Furthermore, the components are arranged inside a hollow screw, thereby reducing the axial height of the brake caliper. Therefore, the brake caliper in the present disclosure can resist the impact of various factors in the braking working condition, thereby ensuring the service life of the motion conversion mechanism 4, and reducing the axial height of the brake caliper, to facilitate mounting on an entire vehicle.

The detailed description is provided below with embodiments.

### Embodiment 1

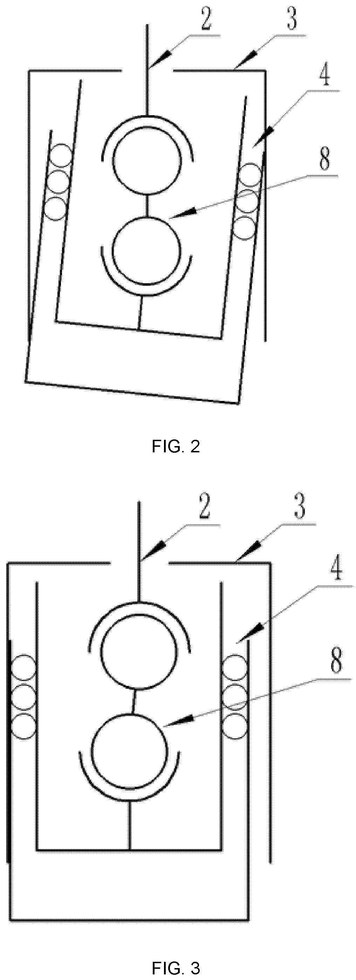

As shown in FIG. 1 to FIG. 3, a brake caliper of the present embodiment includes a brake caliper body 3, an actuator 1, a motion conversion mechanism 4, and an adjusting part 8.

The brake caliper body 3 has a floating caliper structure and includes a cylinder bore and a hook structure. An inner brake pad 16, a brake disc 17, and an outer brake pad 18 are mounted in the hook structure in sequence. The actuator 1 includes a motor and a speed-reducing and torque-increasing mechanism.

As shown in FIG. 1 to FIG. 3, the motion conversion mechanism 4 includes a rotating part 4a and a translating part 4b. In this embodiment, the motion conversion mechanism 4 is an internal circulation ball screw. The rotating part 4a is a screw shaft, and the translating part 4b is a nut. The translating part 4b and the rotating part 4a form a ball screw assembly. The actuator 1 and the rotating part 4a are connected through the coupling 2, which is configured to transmit torque and rotational speed. A second bearing 10, which is a sliding bearing, is mounted between the coupling 2 and the brake caliper body 3.

As shown in FIG. 1 to FIG. 3, the adjusting part 8 has an oval-shaped structure. The end surfaces at two ends of the adjusting part 8 are spherical surfaces. The adjusting part 8 is arranged in a force flow of the axial force transmission between the actuator 1 and the brake disc 17. The adjusting part 8 and its mating parts form a double-spherical assembly through the spherical surfaces at the two ends. In this embodiment, the mating parts refer to the coupling 2 and the rotating part 4a. The adjusting part 8 enables the ball screw assembly to have angular freedom to rotate around the centers of the sphere of the spherical end surfaces of the adjusting part 8, as well as displacement freedom in the radial direction of the cylinder bore. In addition, a range within which the ball screw assembly can displace in the radial direction relative to the coupling 2 at least includes the radial displacement amount of the translating part 4b in the cylinder bore. The angle at which the ball screw assembly can tilt relative to the coupling 2 or the rotating part 4a at least includes the maximum tilt angle of the coupling 2 caused by the deformation of the brake caliper body 3 and the maximum tilt angle of the translating part 4b caused by the brake pad eccentric wear.

As shown in FIG. 1-3 and FIG. 7, the adjusting part 8 is formed by the spherical surfaces at two ends and an intermediate section located between the spherical surfaces at two ends in a length direction. The spherical surfaces at two ends of the adjusting part 8 are respectively in contact with the adjacent mating parts to form the double-spherical assembly. Relative deflection can occur between the adjusting part 8 and its mating parts. The intermediate section of the adjusting part 8 at least includes two mating portions with different cross-section sizes, all the mating portions are arranged in the length direction of the intermediate section in sequence. The adjacent mating parts respectively mate with the two mating portions of the intermediate section, and the adjacent mating parts rotate synchronously.

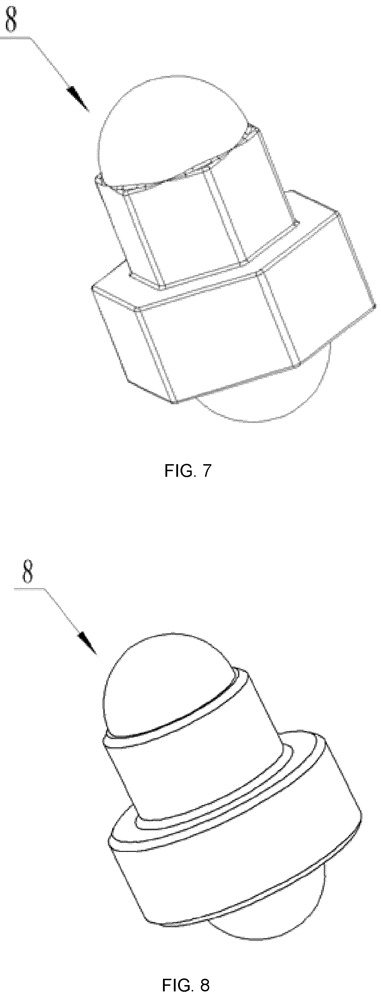

The intermediate section of the adjusting part 8 has a structure capable of transmitting torque, such as a polyhedron, a spline, a flat square, and the like. The adjusting part 8 can transmit torque between the coupling 2 and the rotating part 4a. The coupling 2 can drive the rotating part 4a to rotate through the adjusting part 8. In this embodiment, as shown in FIG. 7, the mating portions of the intermediate section of the adjusting part 8 are hexahedrons. There are two mating portions with different sizes. The centers of the mating portions and the centers of the sphere of the end surfaces at two ends of the adjusting part 8 are on the axis of the adjusting part 8. A first groove for accommodating a spherical end surface at a first end of the adjusting part 8 and a first inner hole for accommodating a first mating portion are provided inside the coupling 2, the first inner hole is a hexagonal hole having the same shape as that of the first mating portion, and a small gap exists between an inner wall surface of the first inner hole and an outer wall surface of the first mating portion. A second groove for accommodating a spherical end surface at a second end of the adjusting part 8 and a second inner hole for accommodating a second mating portion are provided inside the rotating part 4a. A small gap exists between the inner wall surface of the second inner hole and the outer wall surface of the second mating portion, and the second inner hole is a hexagonal hole having the same shape as that of the second mating portion. The first groove and the second groove are spherical grooves. The size of the second mating portion that mates with the rotating part 4a is greater than that of the first mating portion that mates with the coupling 2. A wave spring 9 is mounted between the adjusting part 8 and the rotating part 4a. The wave spring 9 is disposed in the second inner hole, and is sandwiched between the second mating portion that mates with the rotating part 4a and the inner wall surface of the second inner hole. The wave spring 9 exerts an elastic force in an axial direction to the rotating part 4a, to provide the rotating part 4a with a trend of moving toward a position away from the coupling 2 in the axial direction, so that the wave spring 9 may be configured to eliminate an axial gap between the coupling 2 and the adjusting part 8, and keep the adjusting part 8 in an initial state when no force is applied. A square groove and a spherical surface are provided inside the rotating part 4a. An annular groove is opened in a side wall of the rotating part 4a, and a retaining ring 11 is mounted in the annular groove. **The** retaining ring 11 can achieve the relative axial fixation between the coupling 2 and the rotating part 4a. **The** retaining ring 11 is configured to fix the rotating part 4a and the coupling 2 in a movable connection.

As shown in FIG. 1, the brake caliper of this embodiment further includes an anti-rotation mechanism. **The** anti-rotation mechanism is disposed between the translating part 4b and the brake caliper body 3. The anti-rotation mechanism includes an anti-rotation screw 7 and a groove. The anti-rotation screw 7 is disposed on the brake caliper body 3. The groove is provided in an outer wall of the translating part 4b and extends along the axial direction of the translating part 4b. The anti-rotation screw 7 is inserted into the groove to prevent the translating part 4b from rotating together along with the rotating part 4a. When the rotating part 4a rotates, it can drive the translating part 4b to move linearly along the axial direction.

As shown in FIG. 1, a limiting mechanism 4c is disposed between the rotating part 4a and the translating part 4b. The limiting mechanism 4c is matched with the rotating part 4a and the translating part 4b and is configured to prevent the rotating part 4a from being screwed in excessively and causing jamming with the translating part 4b.

As shown in FIG. 1, the brake caliper of this embodiment further includes a first bearing 5. The first bearing 5 is a needle roller thrust bearing. The rotating part 4a has a structure that is open at one end, closed at the other end, and hollow inside. The first bearing 5 and the double-spherical assembly are both disposed at an inner cavity of the rotating part 4a, which can reduce the axial dimension of the caliper.

As shown in FIG. 1, an elastic ring 12 and a dust cover 13 are mounted between the translating part 4b and the cylinder bore of the brake caliper body 3 for sealing. The elastic ring 12 and the dust cover 13 are arranged in an axial direction of the cylinder bore in sequence. In addition, the inner rings of the elastic ring 12 and the dust cover 13 are both in an interference fit with the outer wall of the translating part 4b. The elastic ring 12 and the dust cover 13 are equivalent to providing two support points for the translating part 4b, enabling the translating part 4b to maintain a coaxial state with the cylinder bore when it is screwed in or out.

### Embodiment 2

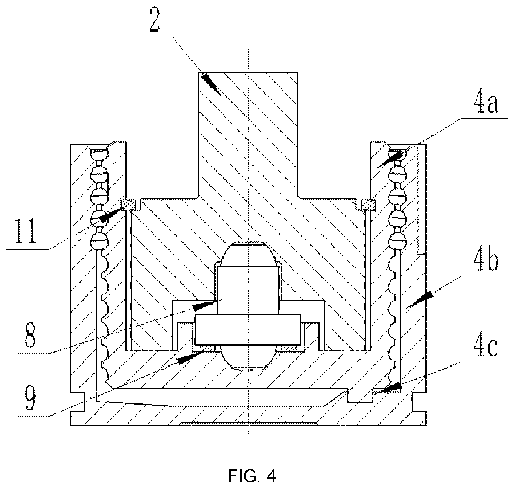

As shown in FIG. 4 and FIG. 8, the difference between the structure of a brake caliper provided in this embodiment and that provided in Embodiment 1 is as follows: In this embodiment, the intermediate section of an adjusting part 8 has a cylindrical structure, and the mating portions are cylinders. The adjusting part 8 does not have a function of transmitting torque between a coupling 2 and a rotating part 4a. An end of the coupling 2 and the rotating part 4a are connected through structures capable of transmitting torque, such as a flat square, a spline, and the like, to achieve the synchronous rotation of the coupling 2 and the rotating part 4a.

Compared with Embodiment 1, an advantage of the brake caliper provided in this embodiment is as follows: the adjusting part 8 is omitted in the torque transmission path, so that a set of mating parts is omitted, and a total clearance amount is reduced, thereby reducing the risk of generating operating noise.

### Embodiment 3

As shown in FIG. 5, the difference between the structure of a brake caliper provided in this embodiment and that provided in Embodiment 1 is as follows: the brake caliper provided in this embodiment further includes a piston 6. The piston 6 fully accommodates a ball screw assembly. An outer wall of the piston 6 mates with an inner wall of the cylinder bore.

As shown in FIG. 5, the brake caliper of this embodiment includes a brake caliper body 3, an actuator 1, a motion conversion mechanism 4, the piston 6, and an adjusting part 8.

The brake caliper body 3 has a floating caliper structure and includes a cylinder bore and a hook structure. An inner brake pad 16, a brake disc 17, and an outer brake pad 18 are mounted in the hook structure in sequence. The actuator 1 includes a motor, as well as a speed-reducing and torque-increasing mechanism.

As shown in FIG. 5, the motion conversion mechanism 4 includes a rotating part 4a and a translating part 4b. In this embodiment, the motion conversion mechanism 4 is an internal circulation ball screw. The rotating part 4a is a screw shaft, and the translating part 4b is a nut. The translating part 4b and the rotating part 4a form the ball screw assembly. The actuator 1 and the rotating part 4a are connected through a coupling 2. The coupling 2 is configured to transmit torque and rotational speed. A second bearing 10 is mounted between the coupling 2 and the brake caliper body 3. The second bearing 10 is a sliding bearing. The piston 6 has a structure that is open at one end, closed at the other end, and hollow inside, and the translating part 4b is fully disposed in an inner cavity of the piston 6.

As shown in FIG. 5, the translating part 4b is hollow inside, with a concave bottom, The central part of the translating part 4b includes a groove and a spherical surface. The piston 6 is hollow inside, with a protruding bottom, and is provided with a groove and a spherical surface. The adjusting part 8 is disposed between the translating part 4b and the piston 6. The adjusting part 8 forms a spherical pair with the translating part 4b and the piston 6 respectively to form a double-spherical assembly.

As shown in FIG. 5, the adjusting part 8 has an oval-shaped structure. The end surfaces at two ends of the adjusting part 8 are spherical surfaces. The adjusting part 8 is disposed in a force flow of axial force transmission between the actuator 1 and the brake disc 17. The adjusting part 8 and mating parts form the double-spherical assembly through the spherical surfaces at the two ends. In this embodiment, the mating parts are the translating part 4b and the piston 6.

The adjusting part 8 enables the piston 6 and the ball screw assembly to rotate by a certain angle around the center of the spherical end face of the adjusting part 8 and to displace to a certain extent in the radial direction of the cylinder bore. In addition, a range within which the piston 6 can displace in the radial direction with respect to the ball screw assembly, at least includes a radial displacement amount of the piston 6 in the cylinder bore. An angle by which the piston 6 can tilt with respect to the ball screw assembly, at least includes a maximum angle by which the coupling 2 tilts due to deformation of the brake caliper body 3, and a maximum angle by which the translating part 4b tilts due to brake pad eccentric wear.

As shown in FIG. 5 and FIG. 7, the adjusting part 8 is formed by the spherical surfaces at the two ends and a intermediate section located between the spherical surfaces at the two ends in a length direction, and the spherical surfaces at the two ends of the adjusting part 8 are respectively in contact with the adjacent mating parts to form the double-spherical assembly. Relative deflection may be generated between the adjusting part 8 and the mating parts. The intermediate section of the adjusting part 8 at least includes two mating portions with different cross-sectional sizes, all the mating portions are arranged in the length direction of the intermediate section in sequence, the adjacent mating parts respectively mate with the two mating portions of the intermediate section, and the adjacent mating parts rotate synchronously.

The intermediate section of the adjusting part 8 may be a structure capable of transmitting torque, such as a polyhedron, a flat square, a spline, and the like. The adjusting part 8 can transmit torque between the coupling 2 and the rotating part 4a. The coupling 2 may drive the rotating part 4a to rotate through the adjusting part 8. In this embodiment, as shown in FIG. 7, the mating portions of the intermediate section of the adjusting part 8 are hexahedrons. Two mating portions are provided, and the two mating portions have different sizes. The centers of the mating portions and the centers of sphere of the end surfaces at the two ends of the adjusting part 8 are on an axis of the adjusting part 8. A first groove for accommodating a spherical end surface at a first end of the adjusting part 8 and a first inner hole for accommodating a first mating portion are provided inside the translating part 4b, the first inner hole is a hexagonal hole having a shape same as that of the first mating portion, and a small gap exists between an inner wall surface of the first inner hole and an outer wall surface of the first mating portion. A second groove for accommodating a spherical end surface at a second end of the adjusting part 8 and a second inner hole for accommodating a second mating portion are provided inside the piston 6, a small gap exists between an inner wall surface of the second inner hole and an outer wall surface of the second mating portion, and the second inner hole is a hexagonal hole having a shape same as that of the second mating portion. The first groove and the second groove are spherical grooves. A size of the first mating portion that mates with the translating part 4b is greater than a size of the second mating portion that mates with the piston 6. A wave spring 9 is mounted between the adjusting part 8 and the translating part 4b. The wave spring 9 is disposed at the first inner hole. The wave spring 9 is sandwiched between the first mating portion that mates with the translating part 4b and the inner wall surface of the first inner hole. The wave spring 9 exerts an elastic force in an axial direction to the translating part 4b, to provide the translating part 4b with a trend of moving toward a position close to the coupling 2 in the axial direction, so that the wave spring 9 can eliminate an axial gap between the coupling 2 and the adjusting part 8, and keep the adjusting part 8 in an initial state when no force is exerted. A square groove and a spherical surface are provided inside the translating part 4b. An annular groove is opened in a side wall of the translating part 4b. A retaining ring 11 is mounted in the annular groove. The translating part 4b is connected to the piston 6 through the retaining ring 11. The retaining ring 11 can achieve the relative axial fixation between the piston 6 and the translating part 4b. The retaining ring 11 is configured to fix the translating part 4b and the piston 6 into a movable connection.

As shown in FIG. 5, the brake caliper in this embodiment further includes an anti-rotation mechanism. The anti-rotation mechanism is disposed between the piston 6 and the brake caliper body 3. The anti-rotation mechanism includes an anti-rotation screw 7 and a groove. The anti-rotation screw 7 is disposed on the brake caliper body 3. The groove is provided in an outer wall of the piston 6. The groove extends in an axial direction of the piston 6. The anti-rotation screw 7 is inserted into the groove, and is configured to prevent the piston 6 and the translating part 4b from rotating together along with the rotating part 4a. When the rotating part 4a rotates, it can drive the translating part 4b and the piston 6 to move linearly in the axial direction.

As shown in FIG. 5, the brake caliper in this embodiment further includes a first bearing 5. The first bearing 5 is a needle roller thrust bearing. The rotating part 4a has a structure that is open at a first end, closed at a second end, and hollow inside. The first bearing 5 and the double-spherical assembly are both disposed at an inner cavity of the rotating part 4a, which can reduce the axial dimension of the caliper.

As shown in FIG. 5, an elastic ring 12 and a dust cover 13 are mounted between the piston 6 and the cylinder bore of the brake caliper body 3 for sealing. The elastic ring 12 and the dust cover 13 are arranged in an axial direction of the cylinder bore in sequence. In addition, the inner rings of the elastic ring 12 and the dust cover 13 are both in an interference fit with the outer wall of the piston 6. The elastic ring 12 and the dust cover 13 are equivalent to providing two support points for the piston 6, enabling the piston 6 to keep in a coaxial state with the cylinder bore when it is screwed in and out.

As shown in FIG. 5, the coupling 2 and the rotating part 4a are fixedly connected in a manner of screwing, welding, or the like, and the translating part 4b and the piston 6 form a movable connection by arranging the retaining ring 11. The intermediate section of the adjusting part 8 is configured to keep the piston 6 from rotating with respect to the translating part 4b.

### Embodiment 4

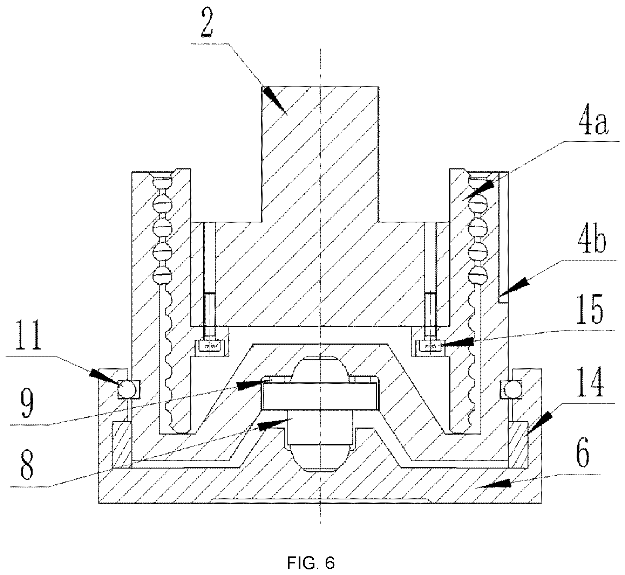

As shown in FIG. 6 and FIG. 8, the difference between the structure of a brake caliper provided in this embodiment and that provided in Embodiment 3 is as follows. In this embodiment, a piston 6 only accommodates a part of the ball screw assembly, a first part of a translating part 4b is disposed in an inner cavity of the piston 6, a second part of the translating part 4b is disposed outside the piston 6, and a groove of an anti-rotation mechanism is provided in an outer wall of the translating part 4b. The outer wall of the translating part 4b mates with the inner wall of a cylinder bore. A radial spring 14 is disposed between the piston 6 and the translating part 4b. After the piston 6 bears a radial force to generate radial displacement, through adjustment of a double-spherical assembly, normal operation of the ball screw assembly is not affected. In addition, after the brake is released, the piston 6 returns to the initial position through the restoring force of the radial spring 14.

As shown in FIG. 8, in this embodiment, an intermediate section of an adjusting part 8 has a cylindrical structure, the mating portions are cylinders, and the adjusting part 8 does not have a function of transmitting torque.

For the brake calipers in Embodiment 3 and Embodiment 4, the position of the adjusting part 8 is changed, and the working principle of the brake calipers is the same as that of the brake caliper in Embodiment 1.

The present disclosure has been exemplarily described above with reference to the accompanying drawings. The specific implementation of the present disclosure is not limited by the above embodiments. Various non-substantial improvements made by adopting the method concept and technical solutions of the present disclosure, or direct application of the foregoing concept and technical solutions of the present disclosure to other scenarios without improvement, all fall within the protection scope of the present disclosure.

## Claims

1. A brake caliper, comprising an actuator, a brake caliper body, and a motion conversion mechanism, wherein the brake caliper further comprises an adjusting part arranged in a force flow of axial force transmission between the actuator and a brake disc, and the adjusting part is movably connected to an adjacent mating part, enabling the motion conversion mechanism to have adjustment degrees to adjust a rotation angle and/or radial displacement.

2. The brake caliper of claim 1, wherein the adjusting part and the adjacent mating part form a spherical pair, a conical pair, a planar pair, or a combination thereof.

3. The brake caliper of claim 1, wherein the adjusting part is formed by spherical surfaces at two ends and an intermediate section located between the spherical surfaces at the two ends, and the spherical surfaces at the two ends of the adjusting part are respectively in contact with their adjacent mating parts to form a double-spherical assembly.

4. The brake caliper of claim 3, wherein the intermediate section of the adjusting part at least comprises two mating portions with different cross-section sizes, the adjacent mating parts respectively mate with the two mating portions of the intermediate section, and the adjacent mating parts rotate synchronously.

5. The brake caliper of claim 4, further comprising a coupling, wherein the actuator is connected to the motion conversion mechanism through the coupling.

6. The brake caliper of claim 5, wherein the motion conversion mechanism comprises a translating part and a rotating part, the rotating part is connected to the coupling, the adjusting part is disposed between the coupling and the rotating part, the adjusting part forms a spherical pair mechanism with the coupling and the rotating part respectively, and the mating parts are the coupling and the rotating part.

7. The brake caliper of claim 6, wherein the mating portions have a non-cylindrical structure, and the coupling and the rotating part are connected through the adjusting part to achieve synchronous rotation.

8. The brake caliper of claim 7, wherein a structure of the mating portions is spline or flat square.

9. The brake caliper of claim 6, wherein the mating portions have a cylindrical structure, and the coupling and the rotating part are connected through the spline or flat square structures to achieve synchronous rotation.

10. The brake caliper of claim 5, further comprising a piston, wherein the motion conversion mechanism comprises a translating part and a rotating part, the adjusting part is disposed between the translating part and the piston, the adjusting part forms a spherical pair mechanism with the piston and the translating part respectively, and the mating parts are the piston and the translating part.

11. The brake caliper of claim 10, wherein the coupling and the rotating part form a fixed connection through screwing, riveting, or welding, and the translating part and the piston form a movable connection through a retaining ring.

12. The brake caliper of claim 10 or 11, wherein the piston is provided with a cavity, the cavity fully accommodates the motion conversion mechanism, and an outer wall of the piston mates with a cylinder bore of the brake caliper body.

13. The brake caliper of claim 10 or 11, wherein the piston is provided with a cavity, the cavity fully accommodates a part of the motion conversion mechanism, and an outer wall of the translating part mates with a cylinder bore of the brake caliper body.

14. The brake caliper of claim 13, wherein a radial spring is mounted between the translating part and the piston.

15. The brake caliper of claim 10, wherein the mating portions have a non-cylindrical structure, and the translating part and the piston are connected through the adjusting part to achieve synchronous axial movement.

16. The brake caliper of claim 15, wherein a structure of the mating portions is spline or flat square.

17. The brake caliper of claim 10, wherein a structure of the mating portions is cylindrical.

18. The brake caliper of any one of claims 6 to 16, wherein an anti-rotation mechanism is disposed between the translating part and the brake caliper body or between the piston and the brake caliper body.

19. The brake caliper of any one of claims 6 to 16, wherein an elastic ring and a dust cover are mounted between the translating part and the cylinder bore of the brake caliper body or between the piston and the cylinder bore of the brake caliper body.

20. The brake caliper of any one of claims 6 to 16, further comprising a bearing, wherein the bearing and the double-spherical assembly are disposed inside the translating part or inside the piston.

21. The brake caliper of any one of claims 6 to 20, wherein a limiting mechanism is disposed between the rotating part and the translating part, and the limiting mechanism matches the rotating part and the translating part.
